# EUROPÄISCHE PATENTSCHRIFT

(11) **EP 0 808 803 B1**
(45) Veröffentlichungstag und Bekanntmachung des Hinweises auf die Patenterteilung: **06.11.2002**
(21) Anmeldenummer: 97810296.0
(22) Anmeldetag: 13.05.1997
(51) Int. Cl.: C02F 3/12, C02F 11/00, C02F 1/36

(54) **Verfahren und Vorrichtung zur kontinuierlichen Desintegration von belebtem Schlamm**
Process and device for continuous disintegration of activated sludge
Procédé et dispositif pour la désintégration continuelle de boue activée

(30) Priorität: 23.05.1996 CH 130096
(43) Veröffentlichungstag der Anmeldung: 26.11.1997
(73) Patentinhaber: Telsonic AG, 9552 Bronschhofen (CH)
(72) Erfinder: Frei, Karl, 9500 Wil (CH); Luger, Klaus, 86934 Reichling Ludenhausen (DE)
(74) Vertreter: Hepp, Dieter

(56) Entgegenhaltungen:
- DE-A- 4 204 607
- DE-C- 19 517 381
- US-A- 4 340 488
- US-A- 4 370 235
- A.C.J. KOOT: "behandeling van afvalwater" 1980 , UITGEVERIJ WALTMAN , DELFT XP002024276 * Seite 89; Abbildung 5.3 *
- DATABASE WPI Section Ch, Week 9301 Derwent Publications Ltd., London, GB; Class D15, AN 93-003819 XP002024291 & JP 04 331 000 A (KUBOTA CORP) , 18.November 1992
- PATENT ABSTRACTS OF JAPAN vol. 008, no. 122 (C-227), 8.Juni 1984 & JP 59 033231 A (SEIKOU KIN;OTHERS: 01), 23.Februar 1984,

## Beschreibung

Die Erfindung betrifft ein Verfahren und eine Vorrichtung zur kontinuierlichen Behandlung von belebtem Schlamm in einer Kläranlage oder Abwasserreinigungsanlage nach dem Oberbegriff der unabhängigen Patentansprüche.

Die in der Praxis bekannte kontinuierliche Behandlung von belebtem Schlamm umfasst die Denitrifikation sowie die biologische Phosphatelimination mittels eines hinzugefügten Kohlenstofflieferanten in der Form von einer externen Substratzugabe. Dies bedeutet zusätzliche organische Belastung des Abwassers und bewirkt einen höheren Schlammanfall. Durch eine Behandlung mit anaeroben Bakterien wird die Gasproduktion unterstützt, was vor allem der Methananteil im Faulgas betrifft. Dadurch kann der Schlamm besser entwässert werden und die Menge an zu entsorgendem Schlamm wird vermindert. Um die Schlammenge weiter zu verringern, ist schon versucht worden, den Schlamm mittels Ultraschall-Energie zu behandeln, um damit die Zellstrukturen des organischen Materials zu beeinflussen. Jedoch hat diese Behandlungsmethode bisher nur ungenügenden Erfolg gebracht.

Aus DE 42 04 607 ist es bekannt, belastete Abläufe und/oder Rohabwässer in einer Abwasserreinigungsanlage vor und/oder während des Kontakts mit einer aktiven Biomasse Ultraschallschwingungen zu unterwerfen. In einem Reaktor ist ein nicht näher beschriebener Ultraschallerzeuger plaziert.

Aus JP 59/033231 (patent abstracts of Japan Volume 008, Nr. 122) ist es zur Extraktion von Chlorophyl bekannt, in einem Ultraschallextraktionsbehälter Ultraschallvibratoren anzuordnen, die Ultraschallschwingungen in Richtung von sich verjüngenden Rohren aussenden.

Aus US 4,370,235 ist es bekannt, Abwasser mit Belebtschlamm mit Ultraschallschwingungen zu beaufschlagen.

Der Erfindung liegt deshalb die Aufgabe zugrunde, ein Verfahren und eine Vorrichtung anzugeben, bei welchen eine weitere Verringerung des verbleibenden biologischen Festschlammes erreicht wird.

Diese Aufgabe wird durch ein Verfahren und eine Vorrichtung gemäss Kennzeichens der unabhängigen Patentansprüche gelöst.

Die Erfindung beruht auf der Erkenntnis, dass eine wirksame und erfolgreiche Zerstörung der Zellwände des organischen Materials im belebten Schlamm erst erreicht werden kann, wenn die Intensität und Art der Beschallung gemäss Kennzeichen von Patentanspruch 1 erfolgt und dass der Belebtschlamm vorzugsweise mehrfach zyklisch in der erfindungsgemässen Weise beschallt werden soll.

Die Beschallungs-Leistung beträgt dabei vorzugsweise 500 bis 1500 W und speziell 700 bis 1000 W. Besonders wesentlich ist es, dass der Klärschlamm aufsteigend, das heisst also entgegen der Sedimentations-Richtung in den Behandlungs-Behälter gespeist wird, was der Entmischung während der Beschallung entgegenwirkt.

Der ansteigende Schlamm wird an der Ultraschall-Quelle, vorzugsweise einem stabförmigen Ultraschall-Resonator vorbeigefördert. Die Behandlung ist dabei auf eine bestimmte Beschallungszeit begrenzt. Dementsprechend wird also in einer Vielzahl von Zyklen (vorzugsweise etwa 8 bis 15 Zyklen, besonders bevorzugt etwa 10 Zyklen) der Klärschlamm erfindungsgemäss beschallt, statt kontinuierlich während einer längeren einzelnen Zeitphase einer Schallquelle ausgesetzt zu werden. Die Beschallungs-Zeit pro Zyklus beträgt dabei ca. 1 bis 6, vorzugsweise 2 bis 4 Minuten. Wichtig ist dabei, dass der am Ultraschall-Resonator vorbeigeführte Belebtschlamm in einem solchen Abstand an der Schallquelle vorbeigeführt wird, dass Kavitation im Belebtschlamm erzeugt wird. Der Abstand der Ultraschallquelle zur Behälterwand beträgt etwa 6 bis 10 cm, vorzugsweise etwa 7 bis 8 cm. Die Ultraschallquelle ist als zylindrisches Bauteil ausgebildet, das etwa achsenparallel, aber aussermittig im Behälterrohr angeordnet ist.

Wesentlich ist auch, dass die Wandung des Behandlungs-Behälters die rechtwinklig zur Längsachse des Ultraschallresonators abgegebenen Ultraschallwellen reflektiert und somit die erzeugte Energie mehrfach auf den Belebtschlamm einwirkt. Dies lässt sich besonders einfach erreichen, wenn der Behandlungs-Behälter ein Rohr ist, das von einem elastischen Medium, insbesondere Luft oder einem anderen Gas umgeben ist. Durch asymmetrische Anordnung der Schallquelle, vor allem also des stabförmigen Ultraschall-Resonators wird vermieden, dass sich reflektierende Wellen überlagern und damit gegenseitig auslöschen. Das Volumen des Behandlungsbehälters beträgt etwa 30 bis 50, vorzugsweise etwa 40 Liter. Eine Anordnung zum Einbringen von etwa 0,2 bis 0,3, vorzugsweise etwa 0,25 Liter Klärschlamm pro Sekunde ist in jedem Behandlungsbehälter vorgesehen. Die Durchfluss- bzw. Beschallungszeit beträgt ca. 2 bis 4, vorzugsweise etwa 2,5 Minuten pro Behandlungszyklus. Besonders vorteilhaft lässt sich die Erfindung verwirklichen, wenn der KLärschlamm kontinuierlich dem Behandlungs-Behälter mit einer Durchlaufgeschwindigkeit von mindestens 0,1 l/Sek. zugeführt und diesem wieder entnommen wird.

In der Praxis hat sich eine Ultraschall-Frequenz in einem Bereich von 16 bis 70 kHz und insbesondere in einem Bereich von 20 bis 25 kHz bewährt. Es ist besonders zweckmässig, wenn der Ultraschall in etwa rechteckigen "Schallpaketen" erzeugt wird. Das bedeutet, dass die Schallwellen mit der Ultraschall-Frequenz mit praktisch voller Leistung einsetzen, für eine bestimmte Zeit etwa kontinuierlich abgestrahlt werden und sodann eine kurze Pause eintritt. Die Folgefrequenz der "Schallpakete" ist dabei vorteilhaft kleiner als 100 Hz. Der Behandlungsbehälter weist vorzugsweise im unteren Bereich eine Zufuhrleitung und im oberen Bereich einen Überlauf auf. Sehr gute Resultate für die Desintegration des organischen Materials im Klärschlamm werden erreicht, wenn das Behandlungs-Behältnis U-förmig ausgebildet und die Zufuhrleitung im Verbindungsteil zwischen beiden Schenkeln des U's angeschlossen ist. Eine schnellere Durchlaufzeit für den Klärschlamm wird erhalten, wenn mehrere U-förmige Behandlungs-Behältnisse mit darin angeordneten Ultraschall-Resonatoren neben einander aufgereiht sind, deren Überläufe bzw. Auslässe über einer gemeinsamen Auffangwanne aufgestellt sind.

Im Verfahrensablauf bei einer Kläranlage ist es besonders vorteilhaft, wenn der in einem Belebtschlamm-Becken behandelte Schlamm kontinuierlich abgezogen, durch eine Beschallungs-Vorrichtung behandelt und wieder dem Belebtschlamm-Becken zugeführt wird. Bei dem derart behandelten Schlamm lässt sich in den nachgeschalteten Behandlungszyklen der Feststoffanteil wesentlich reduzieren.

Wenn dem Belebtschlamm-Becken ein Nachklär-Becken nachgeschaltet ist, kann es vorteilhaft sein, wenn auch dem Nachklär-Becken oder ggf. auch nur dem Nachklär-Becken Schlammanteile entnommen, durch eine Beschallungs-Vorrichtung desintegriert und wieder dem Belebtschlamm-Becken zugeleitet werden.

In der Praxis hat sich dabei gezeigt, dass es besonders wesentlich und vorteilhaft ist, wenn die Klär-Geschwindigkeit bzw. die Durchlauf-Geschwindigkeit durch das Belebtschlamm-Becken und/oder das Nachklär-Becken im Verhältnis zur Durchlaufmenge durch die Beschallungs-Vorrichtung derart eingestellt und gesteuert wird, dass der Belebtschlamm durchschnittlich 5 bis 20 Mal, vorzugsweise 10 bis 15 Mal durch die Beschallungs-vorrichtung geleitet wird, bevor er endgültig aus dem Belebtschlamm-Becken und/oder dem Nachklär-Becken abgeführt wird. Dementsprechend muss die Durchlaufgeschwindigkeit durch die Beschallungs-vorrichtung um den entsprechenden Faktor grösser sein, als die Durchlaufgeschwindigkeit durch das Belebtschlamm-Becken.

Es hat sich auch gezeigt, dass bei einem Eindicken des Belebtschlamms (entweder direkt nach dem Belebtschlamm-Becken oder z.B. nach Nachklärung in einem Nachklär-Becken) der Wasseranteil im eingedickten Feststoff weiter reduziert werden kann, wenn auch ein wesentlicher Teil des einem Eindicker zugeführten Schlamms durch eine Beschallungs-Vorrichtung behandelt wird. Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: eine schematische Darstellung eines Behandlungs-Behälters mit einem darin vorgesehenen Ultraschall-Resonator,
- Fig. 2: eine seitliche Ansicht einer Reihe von U-förmigen Behandlungs-Behältern mit einer gemeinsamen Auffangwanne,
- Fig. 3: eine Draufsicht in Richtung des Pfeiles C in der Darstellung der Figur 2, und
- Fig. 4: die schematische Darstellung des Ablaufs einer Schlammbehandlung.

In den Figuren sind für dieselben Elemente jeweils dieselben Bezugszeichen verwendet worden und es gelten erstmalige Erklärungen für alle Figuren, wenn nicht ausdrücklich anders erwähnt.

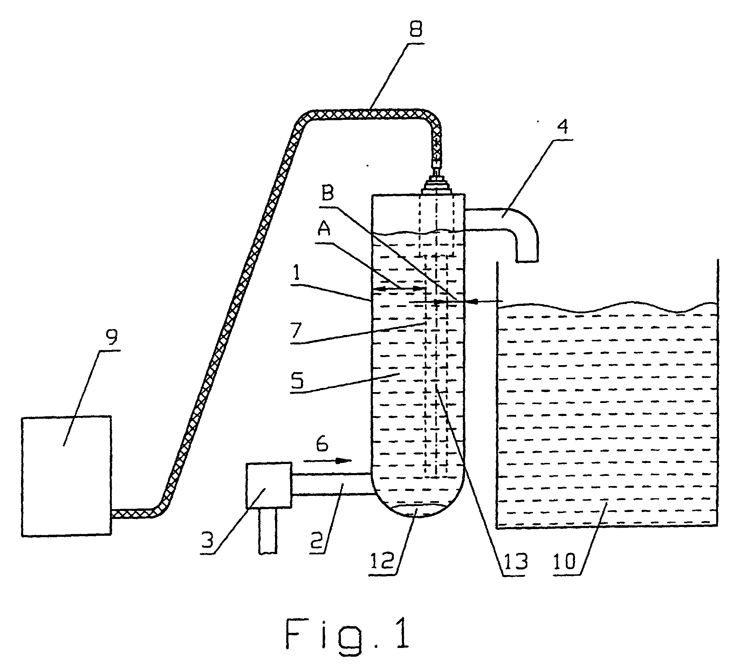

In Figur 1 ist ein Behandlungsbehälter 1 mit einer in seinem unteren Bereich angeordneten Zufuhrleitung 2 mit einer Umlaufpumpe 3 und einem in seinem oberen Bereich vorgesehenen Überlauf 4 gezeigt. Belebter Klärschlamm 5 mit einem hohen Flüssigkeits- oder Wasseranteil von bis zu 99% wird im Gegenstrombetrieb durch das Behandlungs-Behältnis 1 gemäss der mit dem Pfeil 6 gekennzeichneten Strömungsrichtung geleitet. Die Strömungsrichtung ist dabei der Sedimentationsneigung des Belebtschlamms entgegengerichtet. Ein stabförmiger gestrichelt dargestellter Ultraschall-Resonator 7 ist exzentrisch im Behandlungs-Behältnis 1 aufgehängt und über eine elektrische Leitung 8 an einem Hochfrequenz-Generator 9 angeschlossen. Der Überlauf 4 ist über einer Auffangwanne 10 angeordnet, so dass der Klärschlamm 5 oben aus dem rohrförmigen Behandlungs-Behälter 1 austritt. Etwaiges Sediment 12 kann aus dem Behandlungs-Behälter 1 entfernt werden. Die mittlere Verweilzeit des zugeführten Klärschlammes 5 im Behandlungs-Behältnis 1 liegt zwischen 2 und 4 Minuten. Dazu ist die Umlaufpumpe 3 so eingestellt, dass die Durchlaufgeschwindigkeit des Klärschlammes 5 mindestens 0,1 Liter/Sekunde beträgt. In einer bevorzugten Anwendung beträgt die Durchlaufgeschwindigkeit etwa 0,2 bis 0,3 Liter/Sekunde. Das Volumen des Behandlungs-Behälters 1 beträgt vorzugsweise etwa 40 Liter. Das Verhältnis zwischen dem grössten Abstand A und dem kleinsten Abstand B vom Ultraschall-Resonator 7 zur Innenwand des Behandlungs-Behältnis 1 liegt im Bereich von 2:1 bis 5:1. Diese Abstände A und B sind dabei rechtwinklig zur Längsachse 13 des Ultraschall-Resonators 7 gemessen. Die Abstrahlung der Ultraschallwellen geschieht rechtwinklig zur Längsachse 13 des Ultraschall-Resonators 7. Durch die exzentrische Lage des Ultraschall-Resonators 7 wird verhindert, dass die von der Wand des Behandlungs-Behälters 1 reflektierten U1traschallwellen die vom Ultraschall-Resonator 7 abgestrahlten sich gegenseitig auslöschen können. Unter "exzentrische Anordnung" ist dabei sowohl eine zu der Behälter-Achse parallele, aber aussermittige Anordnung zu verstehen, als auch eine schräg zur Behälter-Achse geneigte Anordnung. Bei der schrägen Anordnung kann der Resonator 7 auch in einem Punkt die Längsachse schneiden. Damit eine möglichst vollständige Reflexion der Ultraschallwellen an der Wand des Behandlungs-Behälters 1 stattfindet, ist der Behandlungs-Behälter 1 von einem gasförmigen Medium wie beispielsweise Luft umgeben. Die Ultraschall-Leistung liegt im Bereich von 500 bis 1200 Watt, vorzugsweise im Bereich von 700 bis 1000 Watt. Die Ultraschall-Frequenz liegt in einem Bereich von 16 bis 70 kHz. In einer besonders bevorzugten Anwendung liegt sie zwischen 20 und 25 kHz. Die Ultraschallwellen können dabei als rechteckige "Schallpakete" erzeugt werden. Durch den runden Querschnitt des Behandlungs--Behälters 1 sind die Abstände der einzelnen Schlammpartikel zum Resonator vergleichbar.

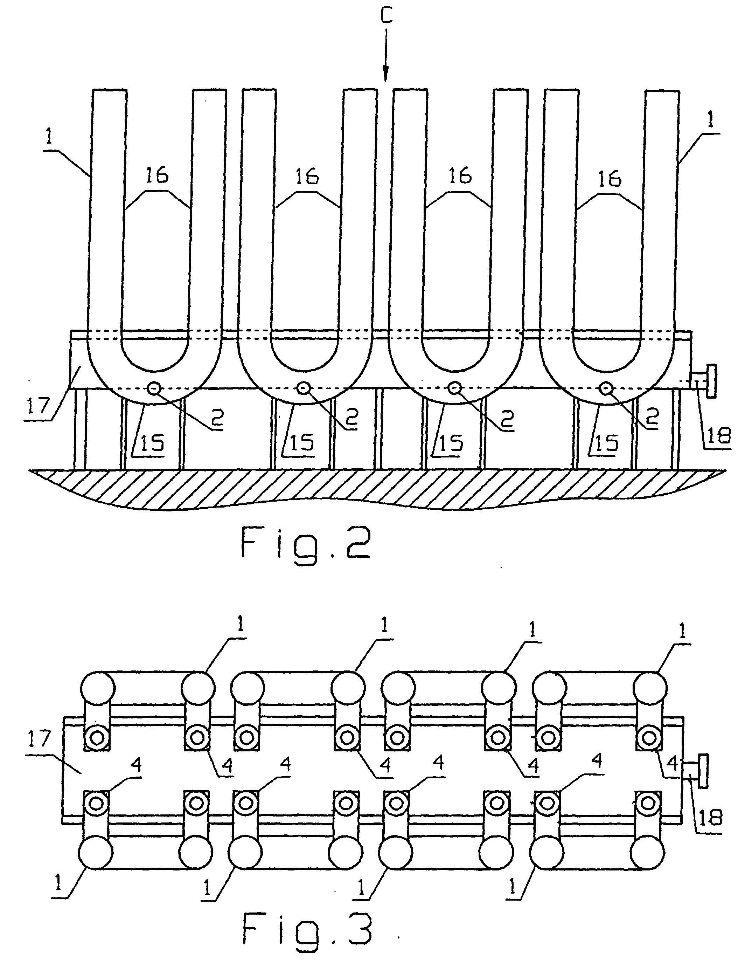

In den Figuren 2 und 3 sind nun mehrere neben einander gereihten U-förmige Behandlungs-Behälter 1 ersichtlich, deren Zufuhrleitungen 2 im Verbindungsteil 15 zwischen den beiden Schenkeln 16 des U's angeschlossen sind. Die Überläufe 4 sind alle über einer gemeinsamen Auffangwanne 17 angeordnet, aus welcher der flüssige oder wässrige Anteil des Klärschlammes 5 über den Stutzen 18 abgezogen wird. Diese Anordnung aus mehreren U-förmigen Behandlungs-Behältern 1 hat sich besonders für grössere Kläranlagen bewährt, da der modulare Aufbau eine sehr einfache Montage erlaubt.

Der gesamte Ablauf der Abwasserreinigung ist nun folgendermassen:
In einem (hier nicht dargestellten) Vorklärbecken sinken die Schlammpartikel und andere ungelöste Schmutzstoffe des zu reinigenden Abwassers auf die Beckensohle ab. Dieses als Primärschlamm bezeichnete Sediment gelangt dann in einen Schlammtrichter, von wo es zu einem Eindicker gepumpt wird. Dieser Primärschlamm wird sodann den verschiedenen Verfahren der Schlammbehandlung zugeführt. Bei der Nachklärung wird aus der Kläranlage ein Überschussschlamm, auch Sekundärschlamm genannt, mit etwa einem Wasseranteil von 99% und einem Feststoffanteil von 1% entnommen. Die Feststoffe setzen sich dabei aus einer Masse von rund 70% organisch gebundener Kohlenstoffen und von rund 30% anorganischer Verbindungen zusammen. Diese Verteilung zwischen den organischen und anorganischen Stoffen schwankt jedoch in einer gewissen Bandbreite um diese Werte. Nur ein Teil der organischen und anorganischen Verbindungen ist im Wasser gelöst, während der andere Teil des Wassers von diesen Verbindungen gebunden ist. Das in Form des Zytoplasmas in den Zellen der Mikroorganismen gebundene Wasser stellt dabei die grössten Probleme bei der mechanischen Entwässerung des Sekundärschlammes. Durch die Desintegration mittels Ultraschalls können diese Zellen nun weiter aufgebrochen werden, so dass dem Sekundärschlamm ein grösserer Wasseranteil entnommen werden kann.

Wenn man den gesamten Klärschlamm in Kläranlagen oder Abwasserreinigungsanlagen betrachtet, so ergibt sich in der Vorklärung ein Primärschlamm mit sedimentierten Feststoffen und in der anschliessenden Nachklärung ein Sekundärschlamm mit Schwebstoffen. Die Aufgabe der biologischen Abwasserreinigung ist die Umsetzung der gelösten organischen Substanzen in eine wiederverwertbare Biomasse mit möglichst geringen Wasseranteil.

Der Primär- und Sekundärschlamm bilden den Rohschlamm, der sich aus einem Gemisch von Wasser, anorganischen und organischen Stoffen zusammensetzt. Die anorganischen Stoffe bestehen aus den in Wasser nicht-löslichen wie Sand, Tonen, Salzen usw. und aus den in Wasser löslichen Stoffen wie beispielsweise Metall-Phosphat-Ionen. Die organischen Stoffen bestehen aus den in Wasser nicht-löslichen wie lebenden und toten organischen Partikeln und aus den in Wasser löslichen wie Polysacchariden, Proteinen usw. Durch eine vorhergehende Entwässerung werden die Schlämme teilweise eingedickt und zusammen mit nicht eingedicktem Schlamm in einen Faulbehälter gepumpt. Diese verbleiben dort in der Regel etwa 20 Tage bei einer Temperatur von ungefähr 37 °C und werden dabei durch Bakterien anaerob, d.h. ohne Sauerstoff, zersetzt.

Ein erheblicher Teil der im Faulschlamm enthaltenen organischen Substanzen liegt in Form von Mikroorganismen als Bestandteil der eigentlichen Biomasse vor. Im konventionellen Faulprozess kann dieser Anteil nicht weiter reduziert werden, da die Bestandteile im Zellinnern durch die Zellwände vor einer enzymatischen Hydrolyse geschützt werden und somit einem weitergehenden biologischen Abbau nicht zugänglich sind.

Mit dem erfindungsgemässen Verfahren mittels Ultraschall wird die Gasausbeute vergrössert und somit das noch verbleibende Restgas und Restwasser auf ein Minimum reduziert. Die bei der zusätzlichen Entwässerung durch das Spalten der Zellwände verbleibenden Feststoffe sedimentieren sehr schnell, wodurch das Volumen der sich abgesetzten Stoffen nochmals erheblich verringert werden kann. Dabei brauchen keine Zusatzstoffe in die Schlammmasse eingeleitet zu werden. Die Menge des Schlammes wird durch die mechanische Entwässerung immer geringer, so dass ansehnliche Einsparungen an Betriebskosten und Personalaufwand erzielt werden können.

Als praktische Anwendungsbeispiele können folgende Verfahren angewandt werden:
1. Vorrangig vor einer Vorklärung wird der aus einem Nachklärbecken abgezogene Rücklaufschlamm durch die oben beschriebene Ultraschall-Methode desintegriert. Die Zellen werden dabei aufgebrochen und die Zellhüllen und andere feste Bestandteile gelangen in einen Schlammtrichter, während der flüssige oder wässrige Anteil aus dem Zellinnern des organischen Materials einem Belebungsbecken zugeführt, wo dieser Schlamm von den beigefügten aeroben Bakterien oxidiert wird. Es ensteht dadurch wesentliche weniger Schlamm, der sich im Nachklärbecken absetzen und als Überschussschlamm die nachgeschaltete Behandlung belasten kann.
2. Es erfolgt eine Desintegration wie im ersten Beispiel, jedoch werden der flüssige oder wässrige Anteil aus dem Zellinnern des organischen Materials als interner Kohlenstofflieferant für den nachfolgenden Denitrifikationsprozess bzw. für die biologische Phosphatelimination eingesetzt werden. Das Zelleninnere setzt nämlich neben Stickstoff- und Phosphorverbindungen auch Kohlenwasserstoffverbindungen frei. Damit entfällt eine externe Zugabe von Kohlenstoff, wie es bei den herkömmlichen Verfahren erforderlich ist.
3. Es erfolgt zusätzlich zur Behandlung der Beispielen 1 und 2 eine Desintegration des Überschussschlammes, wobei der flüssige oder wässrige Anteil aus dem Zellinnern für die nachgeschalteten Denitrifikation verwendet wird. Ein Teil des Überschussschlammes wird zur Anreicherung in den belebtem Schlamm des Nachklärbeckens zurückgeführt. Der übrige Schlamm wird der normalen Schlammbehandlung zugeführt.
4. Es erfolgt wie in Beispiel 3 eine Desintegration des Überschussschlammes und gegebenfalls auch des Primärschlammes, bevor dieser eingedickt wird. Der flüssige oder wässrige Anteil aus dem Zellinnern wird abgezogen und zum Reinigungsprozess zurückgeführt. Die Zellhüllen und andere feste Bestandteile sedimentieren und werden der Schlammbehandlung zugeführt. Dadurch setzen die Feststoffe sich schneller ab und wird das Volumen des Sediments erheblich reduziert. Die Eindickmasse kann dabei eine grössere Menge an Feststoffen aufnehmen.
5. Es erfolgt eine weitere Desintegration des Rohschlammes, bevor dieser eingedickt und dem Faulbehälter zugeführt wird. Ein Teil des flüssigen oder wässrigen Anteils aus dem Zellinnern wird in die Denitrifikationsstufe zurückgeführt und der Rest ist für die anaerobe Behandlung in der Faulung verfügbar. Es erfolgt dadurch ein besserer Abbau der organischen Masse, was eine höhere Gasausbeute ergibt. Ein grösseres Volumen an festen Bestandteilen kann somit in den Faulbehälter aufgenommen werden. Die Aufheizkosten können demzufolge reduziert werden.
6. Es erfolgt eine Desintegration des Schlammes nach dem Faulprozess, jedoch bevor dieser eingedickt wird (Nacheindickung). Der zu behandelnde Faulschlamm wird dazu zum weiteren Abbau dem Faulbehälter zugeführt. Nach dem biologischen Abbau wird dieser Schlamm eingedickt, wo die Feststoffe sedimentieren. Der so entstehende Schlamm wird dann der weiteren mechanischen Entwässerung durch Filterpressen oder dergleichen zugeführt.

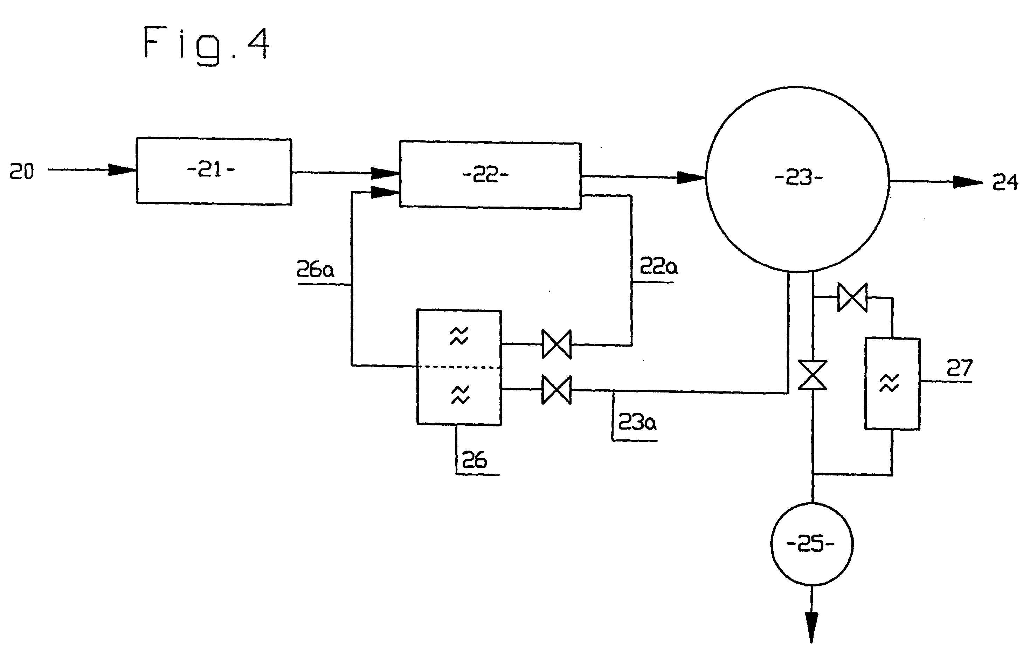

Figur 4 zeigt die schematische Darstellung eines Ablaufs einer Abwasserreinigung. Von einem Zulauf 20 wird das Abwasser einem Vorklär-Becken 21 zugeführt. Rechen, Sandabscheider und andere Vorbehandlungseinrichtungen sind nicht dargestellt. Vom Vorklär-Becken 21 wird das Abwasser einem Belebtschlamm-Becken 22 zugeführt, wobei die Abwasserbehandlung durch Belebtschlamm erfolgt. Aus dem Belebtschlamm-Becken wird der Schlamm zweckmässigerweise einem Nachklär-Becken 23 zugeführt. Aus diesem gelangt geklärtes Abwasser in einen Ablauf 24, während eingedickte Schlamm-Anteile einem Eindicker 25 zugeführt und dort weiter verdickt werden. Danach kann die nicht dargestellte Weiterverarbeitung (z.B. Trocknung) erfolgen.

Mittels einer Beschallungs-Vorrichtung 26 lässt sich beim Ausführungsbeispiel gemäss Figur 4 Belebtschlamm beschallen, der durch eine Leitung 22a dem Belebtschlamm-Becken 22 entnommen wird. Durch die Beschallung erfolgt vor allem eine Veränderung der Schlammstruktur, so dass sich die Menge der im Eindicker 25 angesammelten Feststoffe verringert. Der beschallte Belebtschlamm wird durch eine Leitung 26a im Kreislauf dem Belebtschlamm-Becken wieder zugeführt. Die Zuführung und Abführung erfolgt durch nicht dargestellte Pumpen in bekannter Weise. Dabei ist die Durchlaufgeschwindigkeit des Belebtschlamms im Belebtschlamm-Becken 22 sowie die Durchlaufsteuerung durch die Beschallungsvorrichtung 26 derart eingestellt, dass der im Belebtschlamm-Becken behandelte Schlamm durchschnittlich 5 bis 20 Mal, vorzugsweise etwa 10 bis 15 Mal beschallt wird, bevor er aus dem Belebtschlamm-Becken 22 an das Nachklär-Becken 23 abgegeben wird.

Zusätzlich oder alternativ lässt sich auch aus dem Nachklär-Becken 23 Belebtschlamm über eine Leitung 23a an die Beschallungs-Vorrichtung 26 abgeben und im Kreislauf wieder dem Belebtschlamm-Becken 22 über die Leitung 26a zuführen. So ist es z.B. denkbar, dass sowohl aus dem Belebtschlamm-Becken als auch aus dem Nachklär-Becken Schlamm rückgeführt und beschallt wird. Auf diese Weise lässt sich erreichen, dass der im Nachklär-Becken 23 eingedickte Schlammanteil noch einmal beschallt und in der erfindungsgemässen Weise behandelt wird. Auf diese Weise lässt sich ganz gezielt der im Nachklärbecken abgetrennte Schlammanteil nocheinmal beschallen, was zu einer weiteren Reduzierung des im Eindicker 25 anfallenden Feststoff-Anteils führen kann.

Als weitere Verfahrensvariante ist beim Ausführungsbeispiel gemäss Figur 4 zwischen Nachklär-Becken 23 und Eindicker 25 eine zweite zuschaltbare Beschallungs-Vorrichtung 27 dargestellt. Durch die Beschallungs-Vorrichtung 27 kann gezielt eine weitere Desintegration des vom Nachklär-Becken abgegebenen eingedickten Schlamms durchgeführt werden. Diese Form der Schlammbehandlung zwischen Nachklärbecken 23 und Eindicker 25 durch die zweite Beschallungs-Vorrichtung 27 bewirkt eine weitere Reduktion des im Eindicker 25 abgetrennten Feststoff-Anteils bzw. des im Feststoff enthaltenen Wasseranteils.

Selbstverständlich kann die Anlage auch derart ausgebildet werden, dass nur eine einzige Beschallungs-Vorrichtung vorgesehen wird, die abwechselnd oder wahlweise zur Behandlung des vom Belebtschlamm-Beckens 22 abgezogenen Schlamms oder zur Behandlung des dem Eindicker 25 zugeführten Schlamms eingesetzt wird. Durch entsprechende Rohrleitungen und Anordnungen von Ventilen lassen sich Kreislauf und Behandlungsstufen beliebig steuern.

## Patentansprüche (Patentansprüche für folgende(n) Vertragsstaat(en): AT, BE, CH, DK, ES, FI, FR, GB, GR, IT, IE, LI, LU, MC, NL, PT, SE)

1. Verfahren zur kontinuierlichen Behandlung von belebtem Schlamm in einer Kläranlage oder Abwasserreinigungsanlage, bei welchem der belebte Schlamm von Bakterien biologisch abgebaut und der daraus entstehende Sekundärschlamm in einem Behandlungsbehälter mit Ultraschall beaufschlagt wird, um die Zellwände der in der Biomasse enthaltenen Zellen zu zerstören, **dadurch gekennzeichnet, dass**
(1) der Behandlungs-Behälter im Durchlaufverfahren mit belebtem Sekundärschlamm gespeist wird, wobei der Sekundärschlamm dem Behandlungsbehälter von unten zugeführt, im Gegenstrom gegen die Sedimentationsneigung des Sekundärschlamms im Behälter ansteigend gefördert und im oberen Bereich bei einem Überlauf entnommen wird, wobei der Sekundärschlamm zur Behandlung aufsteigend an einer Ultraschall-Quelle vorbeigefördert wird;
(2) die Ultraschall-Quelle im Behandlungsbehälter so angeordnet wird, dass der Sekundärschlamm die Ultraschall-Quelle im wesentlichen umgibt;
(3) von der Ultraschall-Quelle Ultraschallwellen rechtwinklig zur Längsachse des Ultraschallresonators abgegeben werden und/oder dass Ultraschallwellen asymmetrisch im Behandlungsbehälter abgestrahlt werden und die abgegebene Energie von der Wand des Behandlungs-Behälters reflektiert wird und dass
(4) der Belebtschlamm in einem solchen Abstand an der Schallquelle vorbeigeführt wird, dass im Belebtschlamm Kavitation erzeugt wird.

2. Verfahren nach Anspruch 1, **dadurch gekennzeichnet, dass** der Sekundärschlamm während einer Zeitdauer von 1 bis 6 und vorzugsweise von 2 bis 4 Minuten im Bereich der Schallquelle durch den Behandlungs-Behälter geleitet wird.

3. Verfahren nach Anspruch 1 oder 2, **dadurch gekennzeichnet, dass** der Sekundärschlamm kontinuierlich dem Behandlungs-Behälter zugeführt und entnommen wird.

4. Verfahren nach einem der Ansprüche 1 bis 3, **dadurch gekennzeichnet, dass** die Ultraschall-Frequenz im Bereich von 16 bis 70 kHz liegt, insbesondere im Bereich von 20 bis 25 kHz.

5. Verfahren nach Anspruch 4, **dadurch gekennzeichnet, dass** der Ultraschall als etwa rechteckige, aufeinanderfolgende Wellenpakete erzeugt wird.

6. Verfahren nach einem der Ansprüche 1 bis 5, **dadurch gekennzeichnet, dass** der Belebtschlamm in einer Mehrzahl von Zyklen dem Behandlungs-Behälter zugeführt und dabei mit Ultra schall behandelt wird, vorzugsweise dass er etwa 8 bis 15 mal, besonders vorzugsweise etwa 10 mal behandelt wird.

7. Verfahren nach einem der Ansprüche 1 bis 6, **dadurch gekennzeichnet, dass** die Ultraschallenergie von einem stabförmigen Ultraschallresonator erzeugt wird.

8. Verfahren nach einem der Ansprüche 1 bis 7, **dadurch gekennzeichnet, dass** der Belebtschlamm in einem Belebtschlamm-Becken behandelt wird, im Kreislauf aus dem Belebtschlamm-Becken gepumpt und der Ultraschall-Behandlung zugeführt wird, und dass der behandelte Belebtschlamm sodann wieder dem Belebtschlamm-Becken zugeführt wird,
und/oder dass der Belebtschlamm nachgeklärt, der Ultraschall-Behandlung zugeführt wird,
und dass der behandelte Belebtschlamm sodann wieder dem Belebtschlamm-Becken zugeführt wird.

9. Verfahren nach Anspruch 8, **dadurch gekennzeichnet, dass** der Belebtschlamm einem Schlammeindicker zugeführt wird und dass wenigstens ein wesentlicher Teil des Belebtschlamms dabei durch eine Ultraschall-Quelle behandelt wird.

10. Verfahren nach Anspruch 9, **dadurch gekennzeichnet, dass** der Belebtschlamm vom Belebtschlamm-Becken einem Nachklär-Becken und danach einem Schlammeindicker zugeführt wird.

11. Vorrichtung zur Durchführung des Verfahrens nach einem der Ansprüche 1 bis 10 mit einem Behandlungs-Behälter und einem darin angeordneten Ultraschall-Resonator, **dadurch gekennzeichnet, dass** das der Ultraschall-Resonator exzentrisch im Behandlungs-Behälter angeordnet ist, dass der Behandlungs-Behälter als Rohr ausgebildet ist und die Abstrahlungscharakteristik der Schallwellen rechtwinklig zur Längsachse des Ultraschallresonators auf die Rohrwände zugerichtet ist, und dass die Rohrwände als Reflektoren für den von der Schallquelle auftreffenden Schall ausgebildet sind,
wobei der Behandlungs-Behälter im unteren Bereich eine Zufuhrleitung und im oberen Bereich eine Auslassleitung aufweist und wobei der Belebtschlamm in einem solchen Abstand an der Schallquelle vorbeiführbar ist, dass Kavitation im Belebtschlamm erzeugbar ist.

12. Vorrichtung nach Anspruch 11, **dadurch gekennzeichnet, dass** der Behandlungs-Behälter U-förmig mit zwei Rohr-Schenkeln ausgebildet ist, dass in jenem Rohr-Schenkel eine Schallquelle angeordnet ist und dass die Zufuhrleitung im Verbindungsteil zwischen den beiden Rohr-Schenkeln angeschlossen ist.

13. Vorrichtung nach Anspruch 12, **dadurch gekennzeichnet, dass** mehrere nebeneinander aufgereihte Behandlungs-Behälter mit darin angeordneten Ultraschall-Resonatoren und eine gemeinsame Auffangwanne für den Auslass oder Überlauf der Behandlungs-Behälter vorgesehen sind.

14. Vorrichtung nach einem der vorangegangenen Ansprüche 11 bis 13, **dadurch gekennzeichnet, dass** der Abstand der Ultraschall-Quelle zur Behälterwand etwa 6 bis 10 cm, vorzugsweise etwa 7 bis 8 cm beträgt, dass die Ultraschall-Quelle als zylindrisches Bauteil ausgebildet ist, das etwa achsenparallel aber aussermittig im Behälter-Rohr angeordnet ist.

15. Vorrichtung nach einem der vorangegangenen Ansprüche 12 bis 14, **dadurch gekennzeichnet, dass** das Volumen des Behandlungs-Behälters etwa 30 bis 50 und vorzugsweise etwa 40 1 beträgt, dass eine Anordnung zum Einbringen von etwa 0,2 bis 0,3 vorzugsweise etwa 0,25 1 Sekundärschlamm pro Sekunde in jeden Behandlungs-Behälter vorgesehen ist, und dass die Durchfluss- bzw. Beschallungszeit ca. 2 bis 4 und vorzugsweise etwa 2,5 Minuten pro Behandlungszyklus beträgt.

## Patentansprüche (Patentansprüche für folgende(n) Vertragsstaat(en): DE)

1. Verfahren zur kontinuierlichen Behandlung von belebtem Schlamm in einer Kläranlage oder Abwasserreinigungsanlage, bei welchem der belebte Schlamm von Bakterien biologisch abgebaut und der daraus entstehende Sekundärschlamm in einem Behandlungsbehälter mit Ultraschall beaufschlagt wird, um die Zellwände der in der Biomasse enthaltenen Zellen zu zerstören, **dadurch gekennzeichnet, dass**
(1) der Behandlungs-Behälter im Durchlaufverfahren mit belebtem Sekundärschlamm gespeist wird, wobei der Sekundärschlamm dem Behandlungsbehälter von unten zugeführt, im Gegenstrom gegen die Sedimentationsneigung des Sekundärschlamms im Behälter ansteigend gefördert und im oberen Bereich bei einem Überlauf entnommen wird, wobei der Sekundärschlamm zur Behandlung aufsteigend an einer Ultraschall-Quelle vorbeigefördert wird;
(2) die Ultraschall-Quelle im Behandlungsbehälter so angeordnet wird, dass der Sekundärschlamm die Ultraschall-Quelle im wesentlichen umgibt;
(3) dass die Ultraschallwellen asymmetrisch im Behandlungsbehälter abgestrahlt werden und die abgegebene Energie von der Wand des Behandlungs-Behälters reflektiert wird und
(4) der Belebtschlamm in einem solchen Abstand an der Schallquelle vorbeigeführt wird, dass im Belebtschlamm Kavitation erzeugt wird.

2. Verfahren nach Anspruch 1, **dadurch gekennzeichnet, dass** der Sekundärschlamm während einer Zeitdauer von 1 bis 6 und vorzugsweise von 2 bis 4 Minuten im Bereich der Schallquelle durch den Behandlungs-Behälter geleitet wird.

3. Verfahren nach Anspruch 1 oder 2, **dadurch gekennzeichnet, dass** der Sekundärschlamm kontinuierlich dem Behandlungs-Behälter zugeführt und entnommen wird.

4. Verfahren nach einem der Ansprüche 1 bis 3, **dadurch gekennzeichnet, dass** die Ultraschall-Frequenz im Bereich von 16 bis 70 kHz liegt, insbesondere im Bereich von 20 bis 25 kHz.

5. Verfahren nach Anspruch 4, **dadurch gekennzeichnet, dass** der Ultraschall als etwa rechteckige, aufeinanderfolgende Wellenpakete erzeugt wird.

6. Verfahren nach einem der Ansprüche 1 bis 5, **dadurch gekennzeichnet, dass** der Belebtschlamm in einer Mehrzahl von Zyklen dem Behandlungs-Behälter zugeführt und dabei mit Ultraschall behandelt wird, vorzugsweise dass er etwa 8 bis 15 mal, besonders vorzugsweise etwa 10 mal behandelt wird.

7. Verfahren nach einem der Ansprüche 1 bis 6, **dadurch gekennzeichnet, dass** die Ultraschallenergie von einem stabförmigen Ultraschallresonator erzeugt wird.

8. Verfahren nach einem der Ansprüche 1 bis 7, **dadurch gekennzeichnet, dass** Belebtschlamm in einem Belebtschlamm-Becken behandelt wird, im Kreislauf aus dem Belebtschlamm-Becken gepumpt und der Ultraschall-Behandlung zugeführt wird, und dass der behandelte Belebtschlamm sodann wieder dem Belebtschlamm-Becken zugeführt wird, und/oder dass der Belebtschlamm nachgeklärt, sodann der Ultraschall-Behandlung zugeführt wird,
und dass der behandelte Belebtschlamm sodann wieder dem Belebtschlamm-Becken zugeführt wird.

9. Verfahren nach Anspruch 8, **dadurch gekennzeichnet, dass** der Belebtschlamm einem Schlammeindicker zugeführt wird und dass wenigstens ein wesentlicher Teil des Belebtschlamms dabei durch eine Ultraschall-Quelle behandelt wird.

10. Verfahren nach Anspruch 9, **dadurch gekennzeichnet, dass** der Belebtschlamm vom Belebtschlamm-Becken einem Nachklär-Becken und danach einem Schlammeindicker zugeführt wird.

11. Vorrichtung zur Durchführung des Verfahrens nach einem der Ansprüche 1 bis 10 mit einem Behandlungs-Behälter und einem darin angeordneten Ultraschall-Resonator, **dadurch gekennzeichnet, dass** das der Ultraschall-Resonator exzentrisch im Behandlungs-Behälter angeordnet ist, dass der Behandlungs-Behälter als Rohr ausgebildet ist und die Abstrahlungscharakteristik der Schallwellen rechtwinklig zur Längsachse des Ultraschallresonators auf die Rohrwände zugerichtet ist, und dass die Rohrwände als Reflektoren für den von der Schallquelle auftreffenden Schall ausgebildet sind,
wobei der Behandlungs-Behälter im unteren Bereich eine Zufuhrleitung und im oberen Bereich eine Auslassleitung aufweist und wobei der Belebtschlamm in einem solchen Abstand an der Schallquelle vorbeiführbar ist, dass Kavitation im Belebtschlamm erzeugbar ist.

12. Vorrichtung nach Anspruch 11, **dadurch gekennzeichnet, dass** der Behandlungs-Behälter U-förmig mit zwei Rohr-Schenkeln ausgebildet ist, dass in jenem Rohr-Schenkel eine Schallquelle angeordnet ist und dass die Zufuhrleitung im Verbindungsteil zwischen den beiden Rohr-Schenkeln angeschlossen ist.

13. Vorrichtung nach Anspruch 12, **dadurch gekennzeichnet, dass** mehrere nebeneinander aufgereihte Behandlungs-Behälter mit darin angeordneten Ultraschall-Resonatoren und eine gemeinsame Auffangwanne für den Auslass oder Überlauf der Behandlungs-Behälter vorgesehen sind.

14. Vorrichtung nach einem der vorangegangenen Ansprüche 11 bis 13, **dadurch gekennzeichnet, dass** der Abstand der Ultraschall-Quelle zur Behälterwand etwa 6 bis 10 cm, vorzugsweise etwa 7 bis 8 cm beträgt, dass die Ultraschall-Quelle als zylindrisches Bauteil ausgebildet ist, das etwa achsenparallel aber aussermittig im Behälter-Rohr angeordnet ist.

15. Vorrichtung nach einem der vorangegangenen Ansprüche 11 bis 13, **dadurch gekennzeichnet, dass** das Volumen des Behandlungs-Behälters etwa 30 bis 50 und vorzugsweise etwa 40 1 beträgt, dass eine Anordnung zum Einbringen von etwa 0,2 bis 0,3 vorzugsweise etwa 0,25 1 Sekundärschlamm pro Sekunde in jeden Behandlungs-Behälter vorgesehen ist, und dass die Durchfluss- bzw. Beschallungszeit ca. 2 bis 4 und vorzugsweise etwa 2,5 Minuten pro Behandlungszyklus beträgt.

## Claims (Claims for the following Contracting State(s): AT, BE, CH, DK, ES, FI, FR, GB, GR, IT, IE, LI, LU, MC, NL, PT, SE)

1. Method of a continuous treatment of activated sludge in a sewage clarification plant or a sewage treatment plant wherein the activated sludge is decomposed biologically by bacteria and the resultant secondary sludge is exposed with ultrasonic radiation in a treatment vessel in order to disturb the cell membranes of the cells contained in the biomass, **characterized in that**
(1) in flow through, the treatment vessel is fed with activated secondary sludge, said secondary sludge is supplied to the treatment vessel from below, is fed rising in counter to the tendency of the secondary sludge to settle as sediment in the vessel and is. withdrawn in an upper region at an overflow, and wherein, for treatment, said secondary sludge is fed upwards past an ultrasonic source;
(2) the ultrasonic source is arranged within the treatment vessel in such a way that the secondary sludge in principle surrounds said ultrasonic source;
(3) ultrasonic waves are emitted from the ultrasonic source rectangular towards the longitudinal axis of the ultrasonic resonator and/or that ultrasonic waves are radiated asymmetrically in the treatment vessel and the emitted energy is reflected from the wall of the treatment vessel and that
(4) the activated sludge is passed at the sound source in such a distance, that there is generated cavitation in the activated sludge.

2. Method according to claim 1, **characterized in that** in the region of the sound source the secondary sludge is transmitted through the treatment vessel during a period of 1 to 6 and preferably of 2 to 4 minutes.

3. Method according to claim 1 or 2, **characterized in that** the secondary sludge is contiuously supplied to and withdrawn from the treatment vessel.

4. Method according to any of claims 1 to 3, **characterized in that** the ultrasonic frequency is considered within a range from 16 to 70 kHz, in particular in a range from 20 to 25 kHz.

5. Method according to claim 4, **characterized in that** the ultrasonic radiation is generated in approximately rectangular sequent wave packages.

6. Method according to any of claims 1 to 5, **characterized in that** the activated sludge is supplied to the treatment vessel in a majority of the cycles and with it is treated with ultrasound, preferably that it is treated approximately 8 to 15 times, most preferably approximately 10 times.

7. Method according to any of claims 1 to 6, **characterized in that** the ultrasonic energy is generated from a rod-shaped ultrasonic resonator.

8. Method according to any of claims 1 to 7, **characterized in that** the activated sludge is treated in an activated sludge tank, is pumped into the circulation from the activated sludge tank and is supplied to the ultrasonic treatment, and that the treated activated sludge thereupon again is supplied to the activated sludge tank, and/or that the activated sludge, which is secondary treated and sedimented, is supplied to the ultrasonic treatment, and that the treated activated sludge thereupon is again supplied to the activated sludge tank.

9. Method according to claim 8, **characterized in that** the activated sludge is supplied to a sludge thickener and that with it at least an essential part of the activated sludge is treated by a ultrasonic source.

10. Method according to claim 9, **characterized in that** the activated sludge is supplied from the activated sludge tank to a final sedimentation tank and afterwards to a sludge thickener.

11. Device for carying out the method according to any of claims 1 to 10 with a treatment vessel and an ultrasonic resonator arranged within, **characterized in that** the ultrasonic resonator is arranged eccentrical in the treatment vessel, that the treatment vessel is formed as a tube and that the radiation characteristic of the sound waves is directed rectangular to the longitudinal axis of the ultrasonic resonator towards the tube walls, and that the tube walls are formed as reflectors for the sound entered from the sound source, said treatment vessel comprises a supply pipe in the lower region and a discharge pipe in the upper region and wherein the activated sludge is capable to be passed at the sound source in such a distance that cavitation can be generated in the activated sludge.

12. Device according to claim 11, **characterized in that** the treatment vessel is formed U-shaped with two tube-limbs, that in each tube-limb a sound source is arranged and that, in the connection portion, the supply pipe is connected between the two tube-limbs.

13. Device according to claim 12, **characterized in that** a majority of treatment vessels, with ultrasonic resonators being arranged within, are placed adjacently in a row, and a common collector trough for the discharge or overflow of the treatment vessel is provided.

14. Device according to any of preceding claims 11 to 13, **characterized in that** the distance of the ultrasonic source to the vessel wall is approximately 6 to 10 cm, preferably approximately 7 to 8 cm, that the ultrasonic source is formed as a cylindric element, which is approximately paraxial but is arranged off-center in the vessel tube.

15. Device according to any of preceding claims 12 to 14, **characterized in that** the volumn of the treatment vessel is approximately 30 to 50 and preferably approximately 40 1, that an arrangement for charging of approximately 0,2 to 0,3 preferably approximately 0,25 l secondary sludge per second in each treatment vessel is provided, and that the flow-through time respectively the sonic exposure time per treatment cycle is approximately 2 to 4 and preferably approximately 2,5 minutes.

## Claims (Claims for the following Contracting State(s): DE)

1. Method of a continuous treatment of activated sludge in a sewage clarification plant or a sewage treatment plant wherein the activated sludge is decomposed biologically by bacteria and the resultant secondary sludge is exposed with ultrasonic radiation in a treatment vessel in order to disturb the cell membranes of the cells contained in the biomass, **characterized in that**
(1) in flow through, the treatment vessel is fed with activated secondary sludge, said secondary sludge is supplied to the treatment vessel from below, is fed rising in counter to the tendency of the secondary sludge to settle as sediment in the vessel and is withdrawn in an upper region at an overflow, and wherein, for treatment, said secondary sludge is fed upwards past an ultrasonic source;
(2) the ultrasonic source is arranged within the treatment vessel in such a way that the secondary sludge in principle surrounds said ultrasonic source;
(3) ultrasonic waves are radiated asymmetrically in the treatment vessel and the emitted energy is reflected from the wall of the treatment vessel and that
(4) the activated sludge is passed at the sound source in such a distance, that there is generated cavitation in the activated sludge.

2. Method according to claim 1, **characterized in that** in the region of the sound source the secondary sludge is transmitted through the treatment vessel during a period of 1 to 6 and preferably of 2 to 4 minutes.

3. Method according to claim 1 or 2, **characterized in that** the secondary sludge is contiuously supplied to and withdrawn from the treatment vessel.

4. Method according to any of claims 1 to 3, **characterized in that** the ultrasonic frequency is considered within a range from 16 to 70 kHz, in particular in a range from 20 to 25 kHz.

5. Method according to claim 4, **characterized in that** the ultrasonic radiation is generated in approximately rectangular sequent wave packages.

6. Method according to any of claims 1 to 5, **characterized in that** the activated sludge is supplied to the treatment vessel in a majority of the cycles and with it is treated with ultrasound, preferably that it is treated approximately 8 to 15 times, most preferably approximately 10 times.

7. Method according to any of claims 1 to 6, **characterized in that** the ultrasonic energy is generated from a rod-shaped ultrasonic resonator.

8. Method according to any of claims 1 to 7, **characterized in that** the activated sludge is treated in an activated sludge tank, is pumped into the circulation from the activated sludge tank and is supplied to the ultrasonic treatment, and that the treated activated sludge thereupon again is supplied to the activated sludge tank, and/or that the activated sludge, which is secondary treated and sedimented, is supplied thereupon to the ultrasonic treatment, and that the treated activated sludge thereupon is again supplied to the activated sludge tank.

9. Method according to claim 8, **characterized in that** the activated sludge is supplied to a sludge thickener and that with it at least an essential part of the activated sludge is treated by a ultrasonic source.

10. Method according to claim 9, **characterized in that** the activated sludge is supplied from the activated sludge tank to a final sedimentation tank and afterwards to a sludge thickener.

11. Device for carying out the method according to any of claims 1 to 10 with a treatment vessel and an ultrasonic resonator arranged within, **characterized in that** the ultrasonic resonator is arranged eccentrical in the treatment vessel, that the treatment vessel is formed as a tube and that the radiation characteristic of the sound waves is directed rectangular to the longitudinal axis of the ultrasonic resonator towards the tube walls, and that the tube walls are formed as reflectors for the sound entered from the sound source, said treatment vessel comprises a supply pipe in the lower region and a discharge pipe in the upper region and wherein the activated sludge is capable to be passed at the sound, source in such a distance that cavitation can be generated in the activated sludge.

12. Device according to claim 11, **characterized in that** the treatment vessel is formed U-shaped with two tube-limbs, that in each tube-limb a sound source is arranged and that, in the connection portion, the supply pipe is connected between the two tube-limbs.

13. Device according to claim 12, **characterized in that** a majority of treatment vessels, with ultrasonic resonators being arranged within, are placed adjacently in a row, and a common collector trough for the discharge or overflow of the treatment vessel is provided.

14. Device according to any of preceding claims 11 to 13, **characterized in that** the distance of the ultrasonic source to the vessel wall is approximately 6 to 10 cm, preferably approximately 7 to 8 cm, that the ultrasonic source is formed as a cylindric element, which is approximately paraxial but is arranged off-center in the vessel tube.

15. Device according to any of preceding claims 12 to 14, **characterized in that** the volumn of the treatment vessel is approximately 30 to 50 and preferably approximately 40 l, that an arrangement for charging of approximately 0,2 to 0,3 preferably approximately 0,25 l secondary sludge per second in each treatment vessel is provided, and that the flow-through time respectively the sonic exposure time per treatment cycle is approximately 2 to 4 and preferably approximately 2,5 minutes.

## Revendications (Revendications pour l'(les) Etat(s) contractant(s) suivant(s): AT, DE, CH, DK, ES, FI, FR, GB, GR, IT, IE, LI, LU, MC, NL, PT, SE)

1. Procédé pour le traitement continu de boue activée dans une installation de clarification ou une installation d'épuration des eaux résiduaires, dans lequel la boue activée est biologiquement dégradée par des bactéries et la boue secondaire qui en résulte est soumise, dans un réservoir de traitement, à des ultrasons pour détruire la paroi cellulaire des cellules contenues dans la biomasse, **caractérisé en ce que**
(1) le réservoir de traitement est alimenté, par un procédé en continu, avec de la boue secondaire activée, la boue secondaire étant introduite dans le réservoir de traitement par en-dessous, déplacée vers le haut à contre-courant de la tendance à la sédimentation de la boue secondaire, et prélevée, dans la zone supérieure, au niveau d'un trop plein, la boue secondaire passant, pour le traitement, en mouvement ascendant devant une source d'ultrasons ;
(2) la source d'ultrasons est disposée dans le réservoir de traitement de façon que la boue secondaire entoure presque complètement la source d'ultrasons ;
(3) les ondes ultrasonores sont émises par la source d'ultrasons, perpendiculairement à l'axe longitudinal du résonateur d'ultrasons, et/ou les ondes ultrasonores sont émises d'une manière asymétrique dans le réservoir de traitement, et l'énergie cédée est réfléchie par la paroi du réservoir de traitement, et
(4) la boue activée passe devant la source sonore à une distance telle qu'il en résulte la production d'une cavitation dans la boue activée.

2. Procédé selon la revendication 1, **caractérisé en ce que** la boue secondaire est envoyée pendant un laps de temps de 1 à 6 et de préférence de 2 à 4 minutes dans la zone de la source sonore à travers le réservoir de traitement.

3. Procédé selon la revendication 1 ou 2 **caractérisé en ce que** la boue secondaire est amenée en continu au réservoir de traitement et en est prélevée en continu.

4. Procédé selon l'une des revendications 1 à 3, **caractérisé en ce que** la fréquence des ultrasons est comprise dans la plage de 16 à 70 kHz et en particulier dans la plage de 20 à 25 kHz.

5. Procédé selon la revendication 4 **caractérisé en ce que** les ultrasons sont produits sous forme de paquets d'ondes successifs approximativement rectangulaires.

6. Procédé selon l'une des revendications 1 à 5, **caractérisé en ce que** la boue activée est, en plusieurs cycles, envoyée au réservoir de traitement, et y est traitée par des ultrasons, et de préférence y est traitée environ 8 à 15 fois et, d'une manière particulièrement préférée environ 10 fois.

7. Procédé selon l'une des revendications 1 à 6, **caractérisé en ce que** l'énergie ultrasonore est produite par un résonateur d'ultrasons en forme de barre.

8. Procédé selon l'une des revendications 1 à 7, **caractérisé en ce que** la boue activée est traitée dans un bassin à boues activées, est prélevée par pompage en circuit fermé du bassin à boues activées, et est envoyé au traitement par des ultrasons, et **en ce que** la boue activée traitée est ensuite renvoyée au bassin à boues activées et/ou **en ce que** la boue activée subit une post-clarification et est envoyée au traitement par les ultrasons, et **en ce que** la boue activée traitée est ensuite renvoyée dans le bassin à boues activées.

9. Procédé selon la revendication 8, **caractérisé en ce que** la boue activée est envoyée à un épaississeur de boues, et **en ce qu'**au moins une partie principale de la boue activée est à cette occasion traitée par une source d'ultrasons.

10. Procédé selon la revendication 9, **caractérisé en ce que** la boue activée provenant du bassin à boues activées est envoyée à un bassin de post-clarification puis à un épaississeur de boues.

11. Appareillage pour mettre en oeuvre le procédé selon l'une des revendications 1 à 10, comprenant un réservoir de traitement et un résonateur à ultrasons qui y est disposé, **caractérisé en ce que** le résonateur à ultrasons est disposé en position excentrée dans le réservoir de traitement, **en ce que** le réservoir de traitement est configuré comme un tube, et la caractéristique de rayonnement des ondes sonores est orientée vers les parois du tube perpendiculairement à l'axe longitudinal du résonateur à ultrasons, et **en ce que** les parois tubulaires sont configurées comme des réflecteurs pour le son provenant de la source sonore, le réservoir de traitement comportant dans sa zone inférieure une conduite d'amenée et dans sa zone supérieure une conduite d'évacuation et la boue activée pouvant passer devant la source sonore à une distance telle qu'il puisse y avoir production d'une cavitation dans la boue activée.

12. Appareillage selon la revendication 11 **caractérisé en ce que** le réservoir de traitement a la forme d'un U avec deux branches tubulaires, **en ce qu'**une source sonore est disposée dans chaque branche tubulaire, et **en ce que** la conduite d'amenée est raccordée, dans la partie de liaison, entre les deux branches tubulaires.

13. Appareillage selon la revendication 12, **caractérisé en ce que** l'on prévoit plusieurs réservoirs de traitement, disposés en série les uns à coté des autres, des résonateurs à ultrasons y étant disposés, et comportant un bac de réception commun pour l'évacuation ou le trop-plein des réservoirs de traitement.

14. Appareillage selon l'une des revendications précédentes 11 à 13, **caractérisé en ce que** la distance entre la source d'ultrasons et la paroi du réservoir est d'environ 6 à 10 cm, de préférence d'environ 7 à 8 cm et **en ce que** la source d'ultrasons est configurée comme un composant cylindrique, qui est disposé avec approximativement un parallélisme entre axes, mais en position excentrée dans le tube réservoir.

15. Appareillage selon l'une des revendications précédentes 12 à 14, **caractérisé en ce que** le volume du réservoir de traitement est d'environ 30 à 50 et de préférence d'environ 40 l, **en ce que** l'on prévoit une disposition permettant d'introduire environ 0,2 à 0,3 et de préférence environ 0,25 l de boue secondaire par seconde dans chaque réservoir de traitement, et **en ce que** le temps de passage ou d'exposition aux ultrasons est d'environ 2 à 4 et de préférence d'environ 2,5 minutes par cycle de traitement.

## Revendications (Revendications pour l'(les) Etat(s) contractant(s) suivant(s): DE)

1. Procédé pour le traitement continu de boue activée dans une installation de clarification ou une installation d'épuration des eaux résiduaires, dans lequel la boue activée est biologiquement dégradée par des bactéries et la boue secondaire qui en résulte est soumise, dans un réservoir de traitement, à des ultrasons pour détruire la paroi cellulaire des cellules contenues dans la biomasse, **caractérisé en ce que**
(1) le réservoir de traitement est alimenté, par un procédé en continu, avec de la boue secondaire activée, la boue secondaire étant introduite dans le réservoir de traitement par en-dessous, déplacée vers le haut à contre-courant de la tendance à la sédimentation de la boue secondaire, et prélevée, dans la zone supérieure, au niveau d'un trop plein, la boue secondaire passant, pour le traitement, en mouvement ascendant devant une source d'ultrasons ;
(2) la source d'ultrasons est disposée dans le réservoir de traitement de façon que la boue secondaire entoure presque complètement la source d'ultrasons ;
(3) les ondes ultrasonores sont émises d'une manière asymétrique dans le réservoir de traitement, et l'énergie cédée est réfléchie par la paroi du réservoir de traitement, et
(4) la boue activée passe devant la source sonore à une distance telle qu'il en résulte la production d'une cavitation dans la boue activée.

2. Procédé selon la revendication 1, **caractérisé en ce que** la boue secondaire est envoyée pendant un laps de temps de 1 à 6 et de préférence de 2 à 4 minutes dans la zone de la source sonore à travers le réservoir de traitement.

3. Procédé selon la revendication 1 ou 2, **caractérisé en ce que** la boue secondaire est amenée en continu au réservoir de traitement et en est prélevée en continu.

4. Procédé selon l'une des revendications 1 à 3, **caractérisé en ce que** la fréquence des ultrasons est comprise dans la plage de 16 à 70 kHz et en particulier dans la plage de 20 à 25 kHz.

5. Procédé selon la revendication 4, **caractérisé en ce que** les ultrasons sont produits sous forme de paquets d'ondes successifs approximativement rectangulaires.

6. Procédé selon l'une des revendications 1 à 5, **caractérisé en ce que** la boue activée est, en plusieurs cycles, envoyée au réservoir de traitement, et y est traitée par des ultrasons, et de préférence y est traitée environ 8 à 15 fois et, d'une manière particulièrement préférée environ 10 fois.

7. Procédé selon l'une des revendications 1 à 6, **caractérisé en ce que** l'énergie ultrasonore est produite par un résonateur d'ultrasons en forme de barre.

8. Procédé selon l'une des revendications 1 à 7, **caractérisé en ce que** la boue activée est traitée dans un bassin à boues activées, est prélevée par pompage en circuit fermé du bassin à boues activées, et est envoyé au traitement par des ultrasons, et **en ce que** la boue activée traitée est ensuite renvoyée au bassin à boues activées et/ou **en ce que** la boue activée subit une post-clarification, puis est envoyée au traitement par les ultrasons, et **en ce que** la boue activée traitée est ensuite à nouveau renvoyée vers le bassin à boues activées.

9. Procédé selon la revendication 8, **caractérisé en ce que** la boue activée est envoyée à un épaississeur de boues, et **en ce qu'**au moins une partie principale de la boue activée est à cette occasion traitée par une source d'ultrasons.

10. Procédé selon la revendication 9, **caractérisé en ce que** la boue activée provenant du bassin à boues activées est envoyée à un bassin de post-clarification puis à un épaississeur de boues.

11. Appareillage pour mettre en oeuvre le procédé selon l'une des revendications 1 à 10, comprenant un réservoir de traitement et un résonateur à ultrasons qui y est disposé, **caractérisé en ce que** le résonateur à ultrasons est disposé en position excentrée dans le réservoir de traitement, **en ce que** le réservoir de traitement est configuré comme un tube et la caractéristique de rayonnement des ondes sonores est orientée vers les parois du tube perpendiculairement à l'axe longitudinal du résonateur à ultrasons, et **en ce que** les parois tubulaires sont configurées comme des réflecteurs pour le son provenant de la source sonore, le réservoir de traitement comportant dans sa zone inférieure une conduite d'amenée et dans sa zone supérieure une conduite d'évacuation et la boue activée pouvant passer devant la source sonore à une distance telle qu'il puisse y avoir production d'une cavitation dans la boue activée.

12. Appareillage selon la revendication 11 **caractérisé en ce que** le réservoir de traitement a la forme d'un U avec deux branches tubulaires, **en ce qu'**une source de son est disposée dans chaque branche tubulaire, et **en ce que** la conduite d'amenée est raccordée, dans la partie de liaison, entre les deux branches tubulaires.

13. Appareillage selon la revendication 12, **caractérisé en ce que** l'on prévoit plusieurs réservoirs de traitement, disposés en série les uns à coté des autres, des résonateurs à ultrasons y étant disposés, et comportant un bac de réception commun pour l'évacuation ou le trop-plein des réservoirs de traitement.

14. Appareillage selon l'une des revendications précédentes 11 à 13, **caractérisé en ce que** la distance entre la source d'ultrasons et la paroi du réservoir est d'environ 6 à 10 cm, de préférence d'environ 7 à 8 cm, **en ce que** la source d'ultrasons est configurée comme un composant cylindrique, qui est disposé avec approximativement un parallélisme entre axes, mais en position excentrée dans le tube réservoir.

15. Appareillage selon l'une des revendications précédentes 11 à 13, **caractérisé en ce que** le volume du réservoir de traitement est d'environ 30 à 50 et de préférence d'environ 40 l, **en ce que** l'on prévoit une disposition permettant d'introduire environ 0,2 à 0,3 et de préférence environ 0,25 l de boue secondaire par seconde dans chaque réservoir de traitement, et **en ce que** le temps de passage ou d'exposition aux ultrasons est d'environ 2 à 4 et de préférence d'environ 2,5 minutes par cycle de traitement.
